# DEMANDE DE BREVET EUROPEEN

(11) **EP 0 905 622 A1**
(43) Date de publication de la demande: **31.03.1999**
(21) Numéro de dépôt: 98402185.7
(22) Date de dépôt: 04.09.1998
(51) Int. Cl.: G06F 9/46

(54) **Dispositif et procédé de prise en compte de l'exécution d'une tâche sur un système informatique**

(30) Priorité: 30.09.1997 FR 9712146
(71) Demandeur: BULL S.A., 78434 Louveciennes Cedex (FR)
(72) Inventeur: Durand, Daniel Lucien, 78180 Montigny le Bretonneux (FR); Sitbon, Gérard, 94400 Vitry (FR); Urbain, François, 75002 Paris (FR)

(57) **Abrégé**

La présente invention concerne un procédé et un dispositif de prise en compte de l'exécution d'une tâche sur un système informatique ouvert en fonction des ressources. Le procédé comporte les étapes consistant :
- à déterminer les ressources disponibles en mémoire virtuelle, mémoire réelle, espace fichiers temporaires, utilisation de temps d'unité centrale pendant le dernier intervalle de temps ;
- à calculer le montant des ressources préallouées aux autres requêtes et pas encore utilisées ;
- à comparer le montant de ressources requises pour l'exécution d'une tâche dont la requête a été présentée, au montant courant de ressources disponibles diminuées de la somme du montant des ressources préallouées aux autres requêtes pour déterminer en fonction du résultat de cette comparaison le lancement, l'ajournement ou le refus du lancement de la tâche requise.

## Description

La présente invention concerne un dispositif et un procédé de prise en compte de l'exécution d'une tâche sur un système informatique.

Elle s'applique au domaine de l'exploitation informatique en environnement industriel et notamment aux systèmes informatiques de type "ouvert" fonctionnant sous des logiciels, par exemple, de type "UNIX" ou "WINDOWS NT". Les serveurs qui fonctionnent sous ce type de logiciels sont des serveurs dits "ouverts" et sont particulièrement prisés de nos jours.

L'inconvénient de ces serveurs est d'avoir été développés pour des applications universitaires dont les préoccupations n'étaient pas identiques à celles des préoccupations industrielles. Ainsi, sous un système d'exploitation "UNIX", les travaux, ou plus exactement chacun des processus composant des travaux se voient attribuer une priorité initiale, soit par le système, soit par l'utilisateur qui soumet ces travaux. Pour faire considérer un travail comme plus prioritaire par le système, il faut donc que l'utilisateur lui attribue explicitement une priorité initiale, ou vienne modifier manuellement sa priorité par une commande d'administration. Il n'y a donc aucune régulation ni inter-corrélation entre les niveaux de priorité que l'on attribue à tel ou tel travail.

De même, dans un système "UNIX" classique, les processus peuvent démarrer sans aucune limitation, même sur les systèmes hautement chargés, sans aucune attention au montant de ressources, qui est couramment utilisé par les processus exécutés et sans aucune attention au montant de ressources que nécessitera le nouveau processus. Ceci conduit au mauvais comportement suivant : un paquet de processus est exécuté, les processus critiques aussi bien que les processus non critiques et les processus critiques, qui devraient être achevés à un temps souhaité par l'utilisateur disposent de trop peu de ressources pour être achevés au temps souhaité. Dans un même temps, des processus non critiques utilisent trop de ressources.

Un autre comportement inacceptable est celui où il n'y a pas suffisamment de fichiers temporaires libres et par conséquent, les écritures dans les fichiers échouent. Parfois, l'application contrôle cette condition d'erreur, parfois elle ne la contrôle pas et cela peut générer un comportement faux du fait que des fichiers incomplets sont générés par une étape dans un travail et traités dans des étapes ultérieures. Un autre comportement préjudiciable est celui où il n'y a pas assez d'espace de pagination (PAGING SPACE) et le système prend la décision arbitraire de tuer le processus le plus récent sans considérer son importance. Ceci est inacceptable dans un environnement d'exploitation.

C'est pourquoi le premier but de l'invention est de proposer un procédé de prise en compte de l'exécution d'une tâche qui permette de palier ces inconvénients.

Ce but est atteint par le fait que le procédé de prise en compte de l'exécution d'une tâche sur un système informatique ouvert (par exemple, de type "UNIX") en fonction des ressources est caractérisé en ce qu'il comporte les étapes consistant :
- à déterminer les ressources disponibles en mémoire virtuelle, mémoire réelle, espace fichiers temporaires, utilisation de temps d'unité centrale pendant le dernier intervalle de temps ;
- à calculer le montant des ressources préallouées aux autres requêtes et pas encore utilisées ;
- à comparer le montant de ressources requises pour l'exécution d'une tâche dont la requête a été présentée, au montant courant de ressources disponibles diminuées de la somme du montant des ressources préallouées aux autres requêtes pour déterminer en fonction du résultat de cette comparaison le lancement, l'ajournement ou le refus du lancement de la tâche requise.

Selon une autre particularité, le procédé comporte une étape consistant à définir le montant de ressources requises pour l'exécution d'une tâche par une commande spécifique.

Selon une autre particularité, le procédé comporte une étape consistant à activer ou désactiver le mécanisme de détermination de la disponibilité suffisante de ressources systèmes.

Un autre but de l'invention est de proposer un dispositif de prise en compte de l'exécution d'une tâche.

Selon ce but, le dispositif de prise en compte de l'exécution d'une tâche sous un système d'exploitation ouvert est caractérisé en ce qu'il comporte :
- des moyens de déterminer les ressources disponibles en mémoire virtuelle, mémoire réelle, espace fichiers temporaires, utilisation de temps d'unité centrale pendant un intervalle de temps déterminé ;
- des moyens de calculer le montant des ressources préallouées aux autres requêtes mais pas encore utilisées ;
- des moyens de comparer le montant de ressources requises pour l'exécution d'une tâche dont la requête a été présentée, au montant courant de ressources disponibles diminué de la somme du montant des ressources préallouées aux autres requêtes ;
- et des moyens de commander le lancement, l'ajournement ou le refus du lancement de la tâche requise en fonction du résultat fourni par les moyens de comparaison.

Selon une autre particularité, le dispositif comporte comporte un moyen de définir le montant de ressources requises pour l'exécution d'une tâche par une commande spécifique.

Selon une autre particularité, le dispositif comporte un moyen d'activer ou désactiver le mécanisme de détermination de la disponibilité suffisante de ressources systèmes.

D'autres particularités et avantages de la présente invention apparaîtront plus clairement à la lecture de la description ci-après, faite en référence aux dessins annexés dans lesquels :
- la figure 1 représente une vue schématique du système informatique et des moyens logiciels associés au système informatique pour permettre la mise en oeuvre du procédé de l'invention ;
- la figure 2 représente un exemple de situation dans la gestion des ressources selon l'invention ;

En préalable à la description d'un exemple de réalisation sous UNIX de l'invention, il est utile de rappeler les définitions ci-après.

Dans tout ce qui suit, le terme "processus" ou "tâche" désignera toute exécution d'un programme (et par conséquent, en particulier, son environnement dans le système) à un instant donné, le programme constituant en lui-même, un objet inerte, rangé sur un disque sous la forme d'un fichier ordinaire exécutable. Il est connu, dans les systèmes "UNIX", l'existence de deux types de processus :
- les processus systèmes qui ne sont attachés à aucun terminal, qui sont créés au lancement du système ou à des dates fixées par l'administrateur du système et qui ne sont interrompus qu'à l'arrêt du système. Citons le "SWAPPER", un certain nombre de processus dits "démons" comme par exemple, le processus assurant le bon usage de l'imprimante en "SPOULE" ou le processus "CRON" qui permet de lancer des tâches à une date donnée.
- les processus lancés par un utilisateur particulier depuis un terminal donné à une date donnée. En particulier, le fait de se loger sur un terminal sous une identification donnée provoque le lancement d'un processus correspondant à l'exécution d'un fichier déterminé et à l'avance, pour chaque utilisateur. Ce type de processus correspond presque toujours à l'exécution d'un interprète d'un langage de commande (BOURNE shell ou C-shell). Pour information, nous rappellerons également que l'utilisation de services standards par un usager est réalisée sur une machine distante par l'intermédiaire de commandes, qui pour fonctionner sur la machine distante, nécessitent l'existence de processus particuliers appelés "démons".

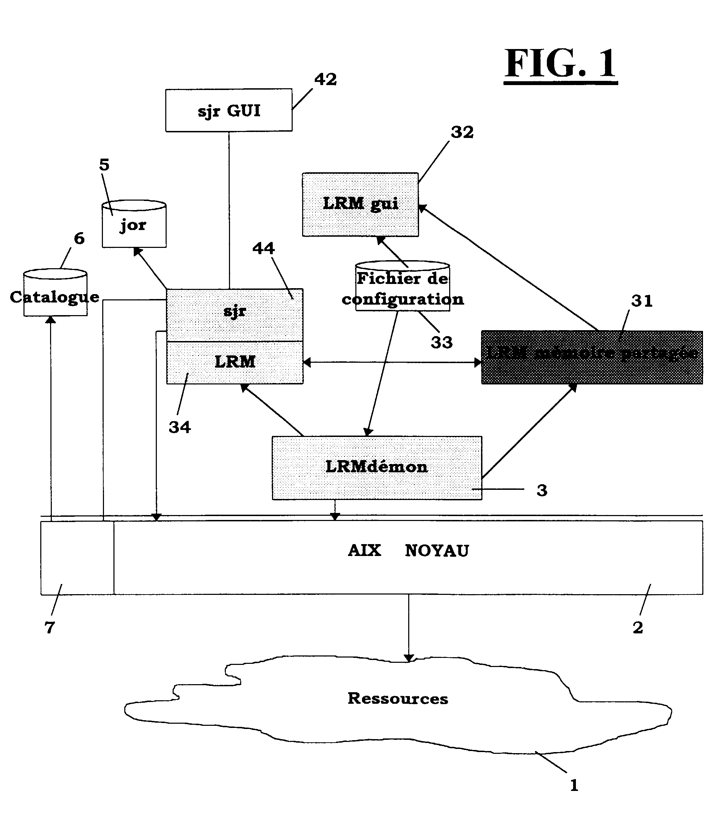

La structure du système "UNIX" représenté à la figure 1 est constitué des ressources matérielles d'un système informatique 1, lequel communique avec un noyau "UNIX" (KERNEL) 2 assurant la gestion de la mémoire et des entrées-sorties de bas niveau et d'enchaînement des différentes tâches (job). Autour de ce noyau, sont utilisés un ou plusieurs "interpreteurs" de langage de commande "shell", un système de messageries et des programmes utilitaires dont évidemment un compilateur de langage C.

Autour de ces éléments classiques dans les systèmes "UNIX", ont été développés, pour les besoins des applications multitâches en environnement ouvert, deux modules "api" de programme, l'un (SJR Service Job Reporting) assurant les rapports d'exécution des tâches lancées par un utilisateur, l'autre (LRM) permettant de visualiser le bon déroulement ou l'arrivée d'incidents et ainsi, de détecter les causes. Ce premier module sera appelé service de compte-rendu de tâches "SJR" (Service Job reporting) et l'autre se nommera "LRM" (Local Ressource Management) module de gestion locale des ressources.

A cela, il a été ajouté pour les besoins de l'invention, un démon (daemon) 3 de management local des ressources qui communique d'une part, avec le noyau 2 et d'autre part, avec une interface de programme d'application 34. Ce démon (daemon) 3 communique également avec un fichier 33 de configuration LRM 33, mémorisé dans le disque dur et avec une interface graphique utilisateur (LRM gui) associée 32 (Graphic Uper Interface). L'interface d'application de programme d'application 34 communique d'une part, avec le démon 3 et d'autre part, avec une mémoire partagée 31. Cette mémoire partagée est également en communication avec l'interface graphique utilisateur 32 et le démon 3. Pour les besoins de la préallocation, le système incorpore une interface 44 de programme d'application "SJR" effectuant le compte-rendu d'exécution de tâches (Service Job Reporting). Cette application 44 communique avec un catalogue "jor" mémorisant dans un fichier distinct 5 du disque dur le compte-rendu des tâches. Cette interface 44 de programme d'application communique, sous réserve qu'il soit activé et que les fichiers de compte-rendu de travaux soient mémorisés, avec le démon 34 de gestion locale des ressources pour permettre la préallocation de ressources et la régulation dynamique. L'interface 44 comporte les lignes de codes nécessaires pour permettre l'exécution des commandes disponibles pour l'utilisateur grâce à cette interface. Les commandes disponibles par cette interface 44 sont les suivantes :
- une commande "SJR" qui permet d'émettre une commande au gestionnaire de ressources et de générer l'exécution d'un fichier de compte-rendu. Cette commande figurant en annexe 1 comporte plusieurs options qui permettent de déterminer le nombre de pages de mémoire virtuelle, la quantité d'espace des fichiers temporaires, les dimensions définies par les utilisateurs, la consommation de temps attendu par le CPU, le temps maximum écoulé, le temps maximum CPU, l'espace maximum pour les fichiers temporaires, le nombre maximum de pages de mémoire virtuelle. Cette commande figure en annexe 1 de la description avec la signification de ces différents paramètres.
- une commande "SJRjobstart" (int jobid ; int qflag ; struct SJR_resources *SJR_resources ;), dans laquelle le paramètre jobid est l'identifieur de tâche, SJR_resources est la structure décrivant les ressources nécessitées pour la tâche. Cela peut être 0 si la tâche n'a pas besoin de préallocation de ressources. Le paramètre "qflag", lorsqu'il est nul, signifie que la tâche attendra la disponibilité des ressources. Cette commande vérifie que la tâche peut démarrer, si elle ne peut pas démarrer, le système attend jusqu'à ce que les ressources soient disponibles, ceci est le cas lorsque "qflag" est nul. Si "qflag" n'est pas nul, cela provoque un retour immédiat. Si la tâche peut démarrer, une valeur 0 est renvoyée sinon lorsque "qflag" est positionné, une valeur -1 est renvoyée. De plus, chaque événement majeur d'une tâche est mémorisé lorsqu'il se produit dans un fichier global "logc" du catalogue "jor". Ce fichier peut être visualisé par la commande "sjr log file" qui permet l'affichage des paramètres p, t, d, c, e, C, P, T ci-après définis. De façon à éviter de définir explicitement les paramètres pour chaque soumission de tâche, l'application "SJR" 44 fournit la faculté de déclaration de ressources dans un script. Ainsi, quand le développeur d'une application a bien défini les nécessités de ressources pour sa tâche, il pourra insérer celle-ci dans le script. La tâche sera soumise par la commande "SJR" avec aucun autre paramètre. La syntaxe pour ces lignes de directive est la suivante :
   # option -p "Nombre de pages de mémoire virtuelle"
   # option -t "Montant d'espace de fichiers temporaires"
   # option -d "Fonction définie par l'utilisateur"
   # option - c "Temps CPU attendu"
   # option - e "Temps maximum écoulé"
   # option - C "Limite de temps CPU consommé"
   # option - P "Nombre maximum de pages mémoire virtuelle"
   # option - T "Espace fichiers temporaires maximum"
En cas de conflit, la valeur spécifiée à la soumission de la commande est utilisée ainsi : s'il y a une ligne à l'intérieur du script telle que
#option - C 200
et si le script est soumis avec la ligne de commande suivante :
SJR -C 300 script,
alors la valeur utilisée pour la limite CPU est 300.

Avec un système ainsi équipé du module de gestion locale de ressources, les processus non critiques devraient altérer le moins possible la poursuite de l'exécution des processus critiques. Chaque sorte de processus a sa propre importance. On devrait lui accorder plus ou moins de ressources en fonction de cette importance et en fonction de la charge du système. Pour cette raison, le module "LRM" permet de classifier les processus en dimension. Une dimension sera un jeu de processus couramment exécutés, qui auront la même importance, du point de vue du gestionnaire de ressources locales. Cinq dimensions sont prévues par défaut : une première dimension "SYSTEME", une deuxième dimension "LOT" (BATCH), une troisième dimension "DIVERS" (MISC), une quatrième dimension base de données (DB) et une cinquième dimension traitement transactionnel (TP). Si les processus sont lancés par les utilisateurs normaux directement en arrière-plan, ils appartiennent alors à la dimension "DIVERS". Si les processus sont lancés à travers un script, soumis à l'application de gestion des tâches sans aucune déclaration des dimensions explicites, ils appartiennent alors à la deuxième dimension "LOT" (BATCH). Si les processus n'appartiennent à aucune autre dimension, ils appartiennent alors à la dimension "SYSTEME". Les dimensions "DB" et "TP" sont fournies mais sans aucune définition de processus et pourront être définies par l'utilisateur. A l'exception de la dimension "SYSTEME", il sera possible pour chaque dimension, d'avoir un poids relatif, qui sera mémorisé dans un fichier. Ce poids relatif sera utilisé pour gérer la priorité des processus composant la dimension. La priorité de tous les processus appartenant à une dimension, variera de la même façon. La dimension "SYSTEME" n'a pas de poids relatif et les priorités des processus appartenant à cette dimension ne sont pas modifiées par le gestionnaire de ressources locales (LRM). Les processus, régulés par les dimensions, auront toujours des ressources accordées en fonction de leur poids relatif, même si le système est très chargé. Au moment du lancement du gestionnaire de ressources locales, ou lorsqu'une dimension est créée, sans préciser de poids relatif, cette dimension prend un poids de - 1 par défaut, ce qui veut dire qu'elle existera, mais elle ne sera pas régulée. Une dimension peut également être activée ou désactivée. Si elle est désactivée, les tâches soumises lui appartenant ne seront pas démarrées, mais les tâches, qui sont en cours d'exécution dans cette dimension, continueront à être exécutées.

Lorsqu'un processus résulte d'une commande d'exécution d'une tâche "SJR", il appartient à la dimension spécifiée, si une dimension a été spécifiée dans la commande "SJR". Lorsque le processus a un ancêtre dont le nom de commande et l'utilisateur sont associés à une dimension, le processus appartient à cette dimension. Pendant le temps d'exécution d'un processus, le poids relatif sera utilisé pour gérer et modifier la priorité des processus composant la dimension. Un processus préalloué n'est soit pas lancé par sjr soit ne comporte pas de paramètres de préallocation.

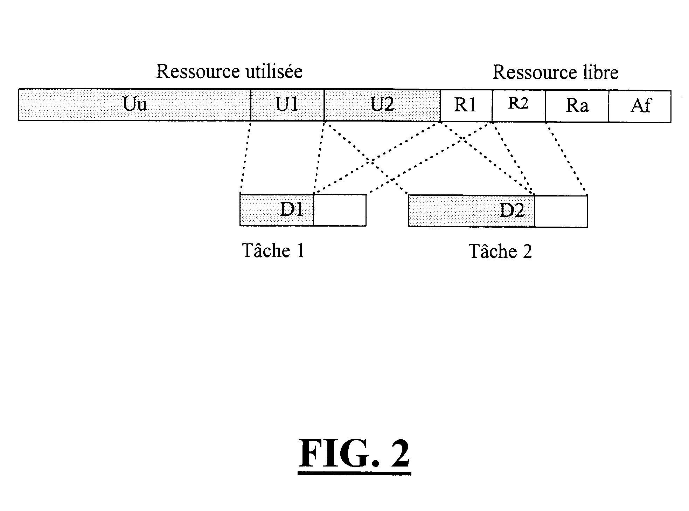

Grâce à l'application de gestion de ressources, l'utilisateur ainsi que le gestionnaire de ressources connaîtront pour chaque ressource à un temps donné, combien de ressources sont actuellement utilisées et combien de ressources sont déclarées pour chaque tâche. Ainsi, dans l'exemple représenté à la figure 2, uⁿ représente les ressources utilisées par les processus non préalloués. Ra représente le montant des ressources libres, réservées pour les processus administratifs et systèmes. U1, U2 représentent les ressources utilisées par les tâches 1 et 2. D1 et D2 représentent les ressources déclarées pour les tâches 1 et 2. R1 représente la différence entre D1 et U1. R2 représente la différence entre D2 et U2, Af représente les ressources considérées comme disponibles par le gestionnaire de ressources. Si une tâche est soumise et déclare un montant de ressources D3 nécessaires, elle ne démarrera que si Af est supérieur à D3. On comprend ainsi, l'intérêt de l'allocation préalable de ressources pour ne permettre le lancement d'une tâche, que lorsque le minimum de ressources nécessaires est disponible.

Le mécanisme de préallocation de mémoire virtuelle et d'espace de fichiers temporaires est mis en oeuvre par une commande "SJR" constituant également un processus qui contribue au bon fonctionnement du système. Quand une tâche est soumise, elle peut demander par la commande SJR un certain montant de ressources. Le gestionnaire de ressources essaie alors de s'assurer qu'il y a suffisamment de ressources pour la tâche. Les tâches peuvent être soumises avec des options, une première, qui est de fournir un temps maximum écoulé et une seconde, qui est le temps total attendu d'unité centrale pour la tâche. Quand une requête de ressources est examinée, les valeurs suivantes sont considérées :
- le montant de ressources requises "r" ;
- le montant courant de ressources disponibles "A" ;
- les ressources déjà préallouées aux autres requêtes, mais pas encore utilisées "R" ;
- un montant initial de ressources "Ra" déclaré au départ par l'utilisateur au gestionnaire de ressources pour aider à prévenir les avortements dus à l'allocation de ressources incontrôlées.

Le montant courant de ressources "A" est une information obtenue périodiquement et mise à jour périodiquement par le "démon" LRM en vérifiant les tables d'informations systèmes qui sont mémorisées. La valeur des ressources déjà préallouées "R" est aussi déterminée par le "démon" LRM, qui rassemble les utilisations courantes de ressources par les tâches. "Ra" est une valeur fixée, fournie par le "démon" LRM comme étant l'un de ces arguments.

La requête sera satisfaite si r < A - (R +Ra). A chaque requête, le démon effectue ce calcul et satisfait ou non à la requête en fonction du résultat de la comparaison. Une fois qu'une requête de ressources correspondant à un lancement de tâche a été satisfaite, la tâche s'exécute en tenant compte de l'évolution de sa priorité.

Les annexes qui suivent concernent les parties de code permettant de calculer la mémoire totale virtuelle et la mémoire réelle disponible. Ce calcul est effectué par la partie de code ci-dessous.
... Computing Available and Total Virtual and Real Memory.

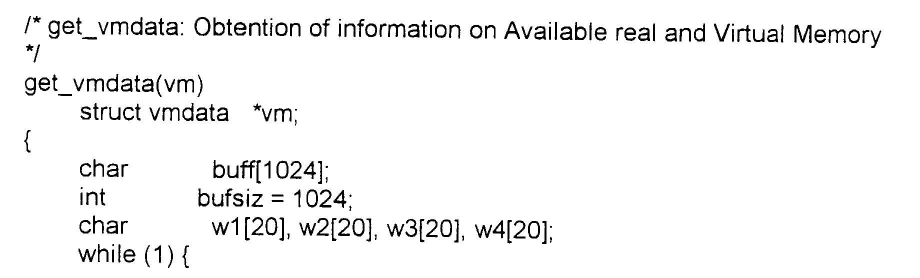

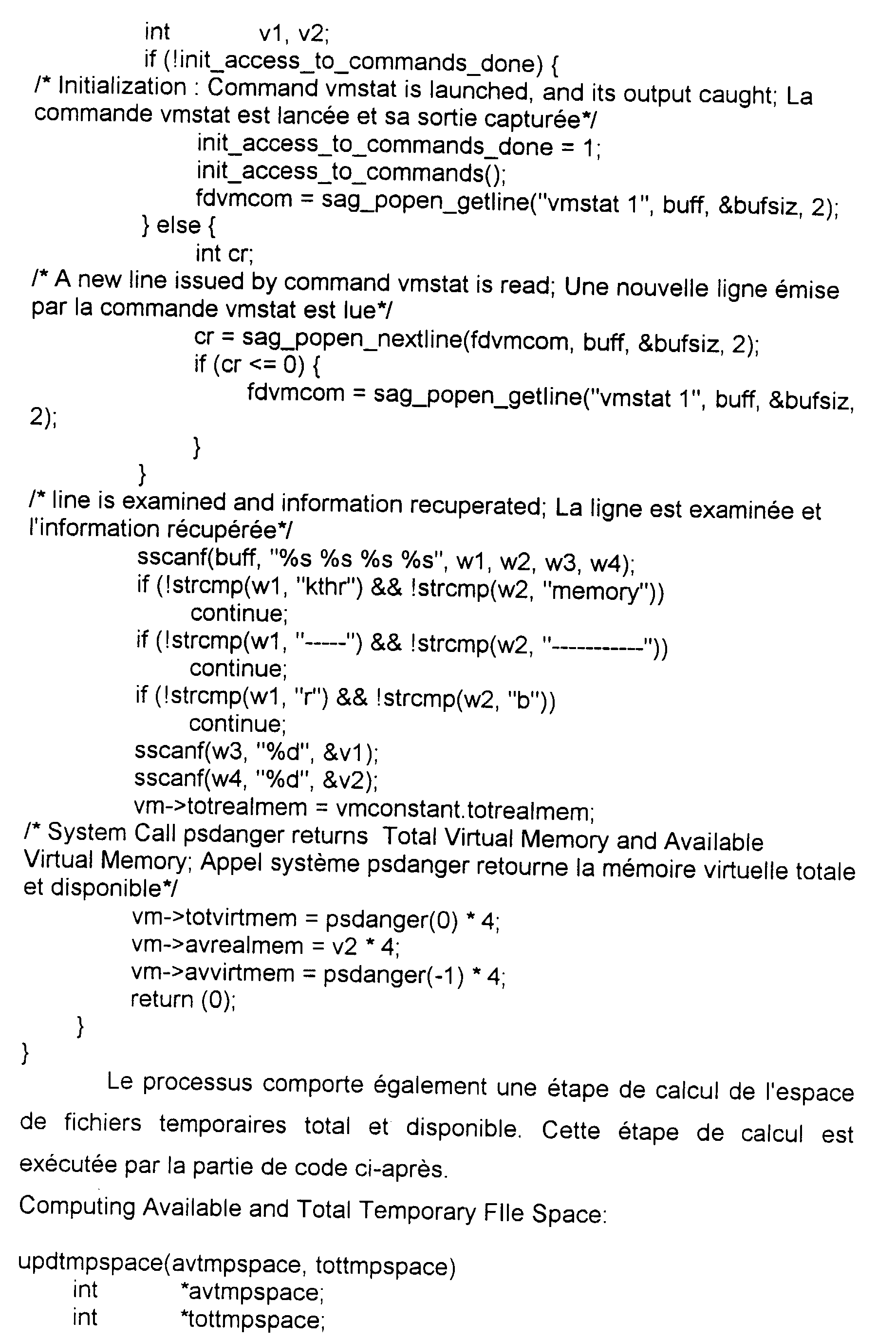

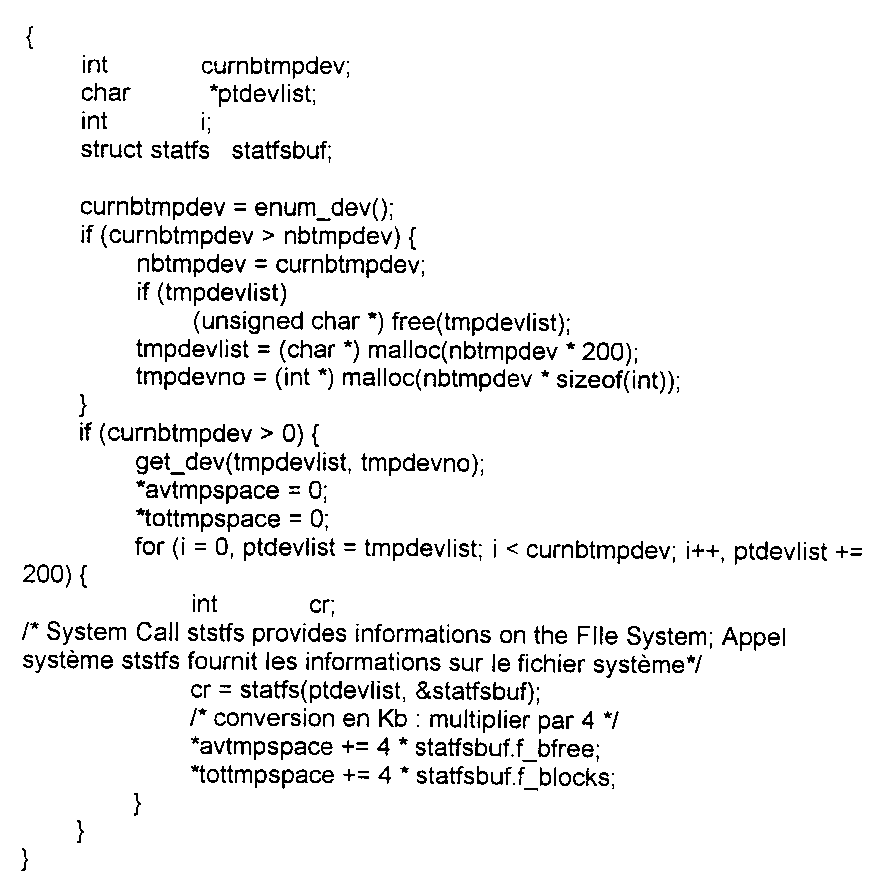

Puis, on détermine également l'usage d'unité centrale effectué pendant le dernier intervalle de temps et cette détermination est faite à l'aide la partie de code ci-après.

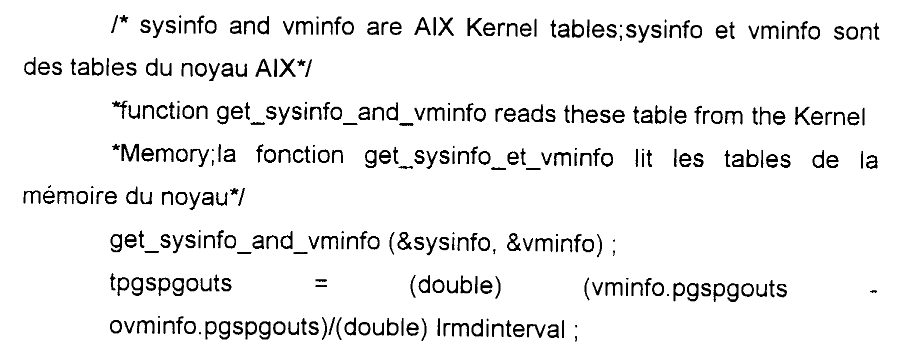

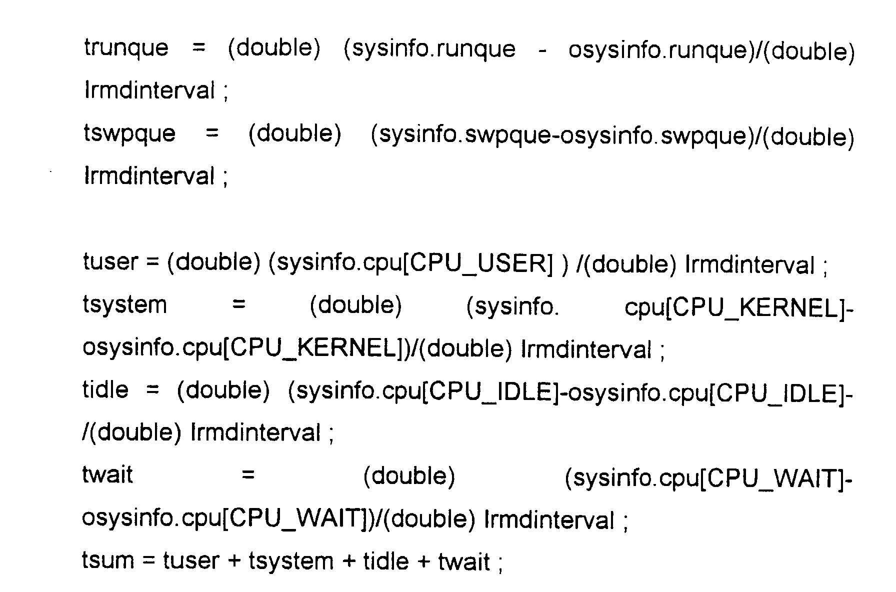

Le processus comporte également une étape de détermination des espaces préalloués mais pas encore utilisés par les tâches. Cette étape est effectuée par la partie de code ci-après.
Computing Prealloc space not used by jobs:

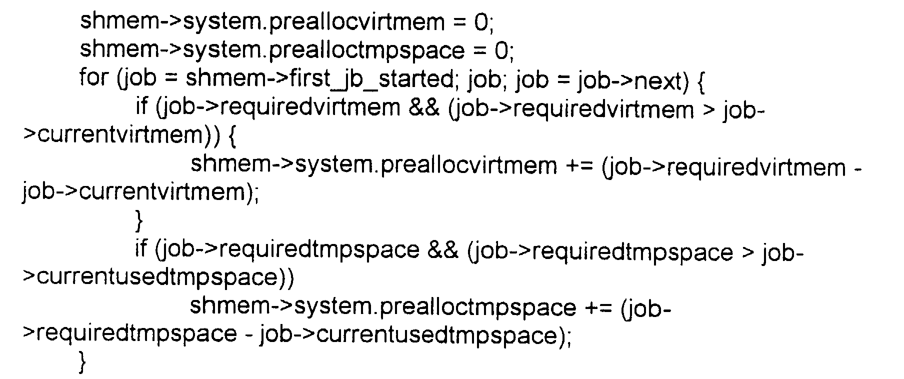

L'évaluation effectuée selon la formule R<(R + Ra) et constituée par la partie de code ci-après.
Checking Resources for a job:

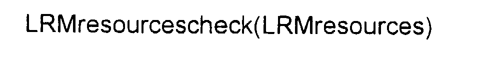

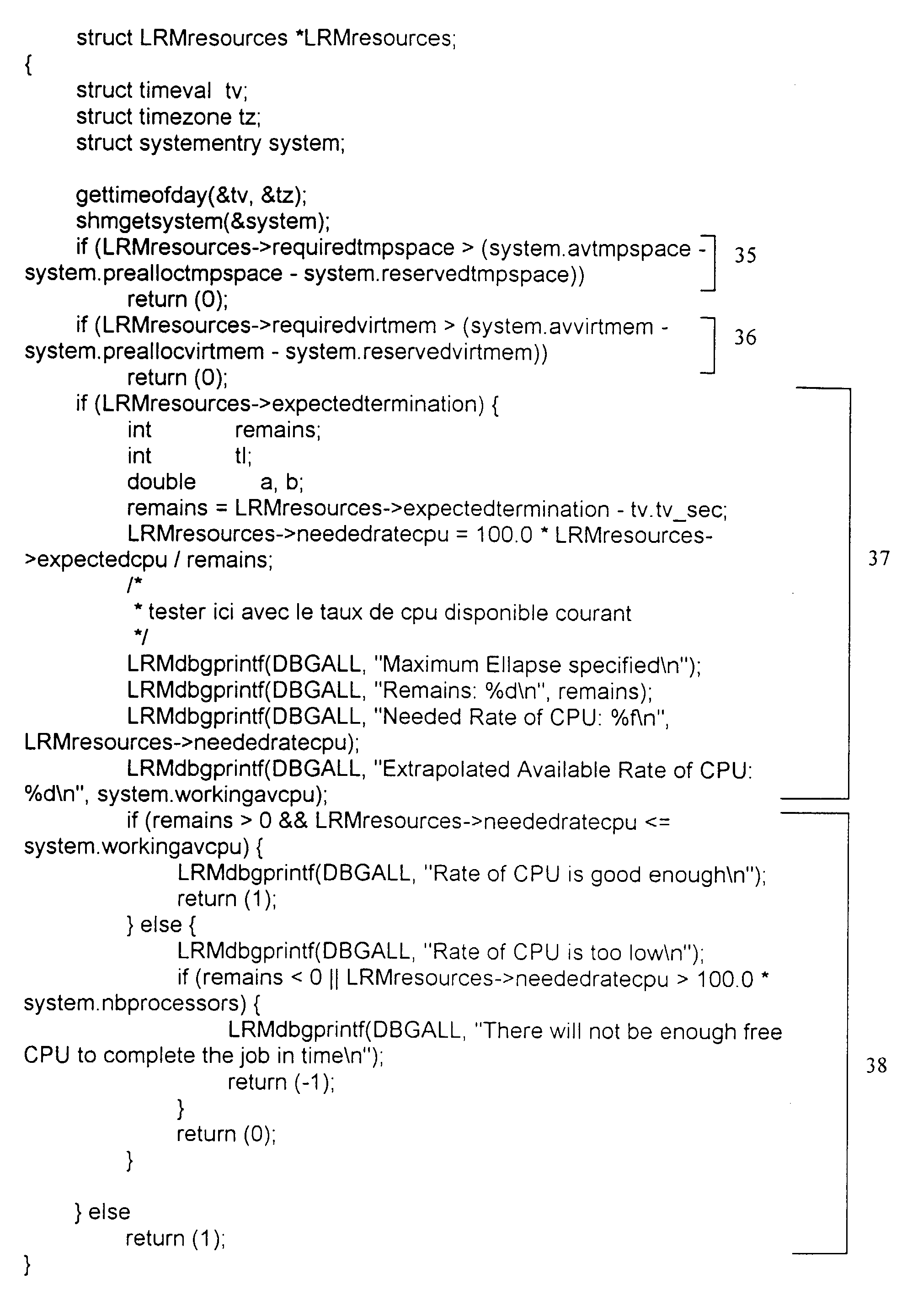

Dans cette partie de code, la portion 35 effectue l'évaluation de la partie espace temporaire et retourne la valeur 0 si l'espace temporaire suffisant est disponible. Puis le processus se poursuit par une évaluation sur la partie mémoire virtuelle effectuée par la portion 36 qui retourne la valeur 0 si l'espace mémoire virtuelle suffisant est disponible. Enfin, le système effectue l'évaluation des ressources CPU disponibles par la partie de code 38. Cette évaluation est faite après avoir déterminé d'une part, les ressources restantes (REMAINS) et le taux CPU nécessaire (NEEDED RATE CPU). Si le taux d'unité centrale disponible est suffisant, le système retourne à la valeur 1, ce qui permet l'exécution de la requête alors que dans le cas où le système retourne à la valeur - 1, la requête de l'exécution de la tâche est ajournée.

Ainsi, par la définition des paramètres nécessaires à l'exécution d'une tâche entrée au préalable dans la commande SJR par l'utilisateur, celui-ci pourra par utilisation du mécanisme décrit précédemment déclencher l'exécution d'une tâche sur le système, lorsque celle-ci disposera des ressources nécessaires à sa bonne exécution.

Toute modification à la portée de l'homme de métier fait également partie de l'esprit de l'invention. Ainsi, le procédé et le dispositif décrits, peuvent facilement être utilisés et appliqués avec un autre système ouvert tel que, par exemple, "WINDOWS NT".

### ANNEXE 1

NAME : sjr command
sjr - submits a command to the resource manager and generates an execution report in a file SYNOPTIQUE
   sjr [-p <Nombre de pages mémoire virtuelle]
   [ -t <Montant d'espace fichier temporaire ]
   [-q]
   [-f]
   [-I]
   [-n]
   [-o]
   [ -d <Dimension définie par utlisateur> ]
   [ -c <Consommation de temps CPU attendu> - e < Temps maximum écoulé ]
   [ -C <Temps maximum CPU> ]
   [ -T <Espace fichier temporaire maximum> ]
   [ -P <Nombre maximum de pages de mémoire virtuelle> ]
   [-r 0| 1| 2| 3]
   [ -v <environmentvariable> = <value> ] ...
   [ command args ... ]

## Revendications

1. Procédé de prise en compte de l'exécution d'une tâche sur un système informatique ouvert en fonction des ressources caractérisé en ce qu'il comporte les étapes consistant:
- à déterminer les ressources disponibles en mémoire virtuelle, mémoire réelle, espace fichiers temporaires, utilisation de temps d'unité centrale pendant le dernier intervalle de temps ;
- à calculer le montant des ressources préallouées aux autres requêtes et pas encore utilisées ;
- à comparer le montant de ressources requises pour l'exécution d'une tâche dont la requête a été présentée, au montant courant de ressources disponibles diminuées de la somme du montant des ressources préallouées aux autres requêtes pour déterminer en fonction du résultat de cette comparaison le lancement, l'ajournement ou le refus du lancement de la tâche requise.

2. Procédé selon la revendication 1, caractérisé en ce qu'il comporte une étape consistant à définir le montant de ressources requises pour l'exécution d'une tâche par une commande spécifique.

3. Procédé selon la revendication 1 ou 2, caractérisé en ce qu'il comporte une étape consistant à activer ou désactiver le mécanisme de détermination de la disponibilité suffisante de ressources systèmes.

4. Dispositif de prise en compte de l'exécution d'une tâche sur un système d'exploitation ouvert caractérisé en ce qu'il comporte :
- des moyens de déterminer les ressources disponibles en mémoire virtuelle, mémire réelle, espace fichiers temporaires, utilisation de temps d'unité centrale pendant un intervalle de temps déterminé ;
- des moyens de calculer le montant des ressources préallouées aux autres requêtes mais pas encore utilisées ;
- des moyens de comparer le montant de ressources requises pour l'exécution d'une tâche dont la requête a été présentée, au montant courant de ressources disponibles diminué de la somme du montant des ressources préallouées aux autres requêtes ;
- et des moyens de commander le lancement, l'ajournement ou le refus du lancement de la tâche requise en fonction du résultat fourni par les moyens de comparaison.

5. Dispositif selon la revendication 4, caractérisé en ce qu'il comporte un moyen de définir le montant de ressources requises pour l'exécution d'une tâche par une commande spécifique.

6. Dispositif selon la revendication 4 ou 5, caractérisé en ce qu'il comporte un moyen d'activer ou désactiver le mécanisme de détermination de la disponibilité suffisante de ressources systèmes.
